# EUROPÄISCHE PATENTSCHRIFT

(11) **EP 2 349 881 B1**
(45) Veröffentlichungstag und Bekanntmachung des Hinweises auf die Patenterteilung: **08.05.2013**
(21) Anmeldenummer: 09751783.3
(22) Anmeldetag: 21.10.2009
(51) Int. Cl.: B65G 43/00, B65G 45/08

(54) **TRANSPORTSYSTEM**
TRANSPORT SYSTEM
SYSTÈME DE TRANSPORT

(30) Priorität: 29.10.2008 DE 102008053715
(43) Veröffentlichungstag der Anmeldung: 03.08.2011
(73) Patentinhaber: KHS GmbH, 44143 Dortmund (DE)
(72) Erfinder: BUCHKREMER, Wolfgang, 41515 Grevenbroich (DE)
(86) Internationale Anmeldenummer: PCT/EP2009/007530
(87) Internationale Veröffentlichungsnummer: WO 2010/049082

(56) Entgegenhaltungen:
- DE-A1-102005 037 117
- US-A- 4 368 803
- US-A1- 2007 222 612
- US-B2- 7 293 465

## Beschreibung

Die Erfindung bezieht sich auf ein Transportsystem für Packmittel oder Packmittelgruppen gemäß Oberbegriff Patentanspruch 1.

"Packmittel" sind im Sinne der Erfindung Verpackungen oder Behältnisse, die im Lebensmittelbereich und dabei speziell auch im Getränkebereich üblicherweise verwendet werden, und zwar insbesondere Behälter, wie z. B. Flaschen, Dosen, auch Weichverpackungen, beispielsweise solche hergestellt aus Karton und/oder Kunststofffolie und/oder Metallfolie, Transportbehälter, z.B. Flaschenkästen usw. "Packmittelgruppen" im Sinne der Erfindung sind zu Gruppen zusammengestellte Packmittel, beispielsweise Gebinde aus derartigen Packmitteln.

"Behandlungsmaschinen" im Sinne der Erfindung sind Maschinen oder Vorrichtungen zum Behandeln und/oder Verarbeiten von Packmitteln, z.B. Reinigungsmaschinen, Rinser, Füllmaschinen, Verschießmaschinen, Maschinen zum Bedrucken von Packmitteln, Etikettiermaschinen, Maschinen zum Ein-und/oder Auspacken, insbesondere Verpackungsmaschine oder Maschinen zum Aufbringen von Schrumpffolie, usw.

Transportsysteme für Packmittel und deren Transporteure sind in unterschiedlichen Formen bekannt, beispielsweise als "äußere" Transporteure, d.h. außerhalb von Behandlungsmaschinen angeordnete Transporteure zum Zuführen von Packmitteln an Behandlungsmaschinen oder aber als maschineninterne Transporteure zum Bewegen der Packmittel innerhalb einer Behandlungsmaschine oder durch eine derartige Maschine.

Speziell bekannt sind Transportsysteme, bei denen das die Packmittel in einer Transportrichtung bewegende Transportelement des Transporteurs eine Transportkette mit mehreren Kettengliedern ist, wobei die Packmittel beim Transport auf der Transportkette aufstehend oder an dieser hängend gehalten sind.

Transporteuren dieser Art und dabei beispielsweise bei einem Transporteur, der Bestandteil einer Maschine zum Verpacken von Flaschen ist, ist auch bekannt (DE195 40 594 A1), an dem Transporteur bzw. an der von diesem gebildeten Transportstrecke ein mit der Transportkette nicht mitbewegtes Messmodul vorzusehen, mit welchem das Vorhandensein oder Nicht-Vorhandensein der Flaschen überwacht wird. Ein Transport sytem gemäß dem Oberbegriff des Anspruchs 1 ist bereits aus US 7293 465 B2 bekant.

Aufgabe der Erfindung ist es, ein Transportsystem aufzuzeigen, welches eine ständige und insbesondere auch unmittelbare Erfassung von physikalischen Größen an dem sich in Transportrichtung bewegenden Transportelement ermöglicht, und zwar in vereinfachter, aber sehr zuverlässiger Weise. Zur Lösung dieser Aufgabe ist das Transportsystem entsprechend dem Patentanspruch 1 ausgebildet.

Die Besonderheit des erfindungsgemäßen Transportsystems bzw. des wenigstens einen Transporteurs dieses Systems, besteht darin, dass an dem in Transportrichtung bewegten Transportelement wenigstens ein mit dem Transportelement mitbewegtes Messmodul vorgesehen ist, welches als RFID-TAG bzw. RFID-Transponder oder nach Art eines solchen RFID-TAGs bzw. RFID-Transponders oder dessen Architektur ausgebildet ist und mit wenigstens einem Sensor zur Erfassung wenigstens eines physikalischen Wertes zusammenwirkt, beispielsweise zur Erfassung von Kräften und/oder Temperaturen und/oder Drücken.

Bei einer bevorzugten Ausführungsform der Erfindung ist das Transportelement eine Transportkette bestehend aus mehreren miteinander verbundenen Kettengliedern, wobei dann an wenigstens einem Kettenglied mindestens ein Messmodul oder aber an mehreren Kettengliedern jeweils mindestens ein Messmodul vorgesehen ist, dessen Sensor physikalische Größen, die z.B. den Zustand des Transporteurs definieren oder widerspiegeln, und/oder aber auch andere physikalische Größen erfasst, z.B. die zwischen zwei Kettengliedern wirkende Kraft. Diese Messdaten werden dann an einem RFID-Lese- und Schreib-Kopf drahtlos, d.h. mittels eines elektromagnetischen Feldes ausgelesen und stehen damit aktuell zur Verfügung. Mit den Messdaten sind somit z.B. eine kontinuierliche und automatische Bestimmung und/oder Überwachung des Zustandes des Transporteurs und/oder eine kontinuierliche und automatische Steuerung des Transporteurs möglich. Beispielsweise können die Reibung bzw. der Reibwert zwischen dem Transporteur oder dessen Transportelement (z.B. Transportkette) und einer Führung im belasteten und unbelasteten Zustand des Transportelementes, die Relbung zwischen dem Transportelement und den auf diesem angeordneten Packmitteln usw. kontinuierlich und automatisch ermittelt werden.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

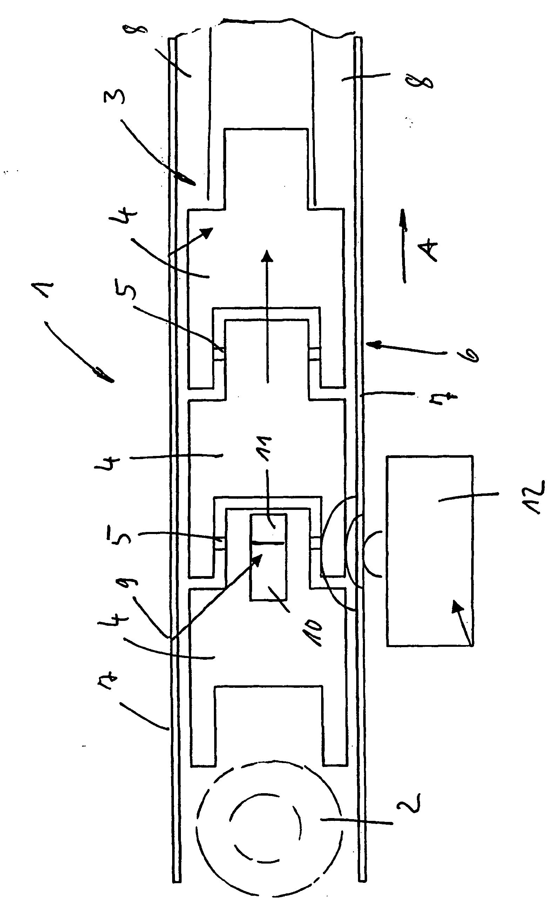

Die Erfindung wird im Folgenden anhand der Figur, die in sehr vereinfachter Darstellung und in Draufsicht einen Transporteur eines Transportsystems gemäß der Erfindung zeigt, näher erläutert.

Der in der Figur allgemein mit 1 bezeichnete Transporteur ist Bestandteil einer Anlage zum Behandlen von Behältern, beispielsweise von Flaschen 2, die aufrechtstehend, d.h. mit ihrer Behälterachse in vertikaler Richtung und damit senkrecht zur Zeichenebene der Figur orientiert auf dem Transporteur 1 bzw. auf der von diesem gebildeten Transportfläche aufstehen und mit dem Transporteur 1 in der mit dem Pfeil A bezeichneten Transportrichtung bewegt werden. Der Transporteur 1 ist beispielsweise ein äußerer Transporteur einer Gesamtanlage zum Behandeln der Behälter 2, beispielsweise ein Transporteur, über den die Behälter 2 einer Anlage zum Behandeln der Behälter 2, z. B. zum Reinigen, Füllen, Verschließen, Etikettieren, Verpacken usw. zugeführt werden und/oder innerhalb einer derartigen Anlage zwischen verschiedenen Maschinen oder Behandlungsvorrichtungen transportiert werden.

Das Transportelement des Transporteurs 1 ist bei der dargestellten Ausführungsform eine Transportkette 3 mit einer Vielzahl von Kettengliedern 4, die jeweils über Achsen oder Bolzen 5 gelenkig miteinander verbunden sind. Die Transportkette 3 ist in der dem Fachmann bekannten Weise als endlos umlaufend antreibbare Kette ausgeführt, die über wenigstens zwei nicht dargestellte Ketten- und Umlenkräder am Anfang und am Ende der von dem Transporteur 1 gebildeten Transportstrecke geführt ist.

Der Transporteur 1 umfasst weiterhin einen Vorrichtungsrahmen 6 der oberhalb der Transportebene der Transportkette 3 seitliche Führungsgeländer 7 für die Behälter 2 bildet und unterhalb der Transportebene Anlage- und Gleitflächen 8, gegen die die Transportkette 3 bzw. deren Kettenglieder 4 mit ihrer Unterseite anliegen. Mit 9 ist in der Figur ein elektrisches Messmodul bezeichnet, welches als - TAG oder RFID-Transponder ausgeführt ist oder einen einem RFID-TAG oder RFID-Transponder ähnlichen Aufbau aufweist, und zwar mit einem RFID-Transponder-Schaltkreis 10, der beispielsweise im Wesentlichen aus einer Antennenstruktur, aus einer analogen Schaltkreisstruktur zum Empfangen und Senden von Daten sowie zur Gewinnung von elektrischer Versorgungsenergie aus dem über die Antennenstruktur empfangenen elektromagnetischen Feld, aus einer digitalen Schaltkreisstruktur sowie aus wenigstens einer Speicherstruktur zum Speichern von Daten besteht. Die Speicherstruktur ist zumindest teilweise als Lese- und Schreibspeicher ausgebildet und umfasst auch einen Permanentspeicher. Das Messmodul 9 beinhaltet wenigstens einen mit dem RFID-Transponder Schaltkreis 10 zusammenwirkenden Sensor 11 zur Messung von wenigstens einer physikalischen Größe und ist, wie von RFID-TAGs bekannt, extrem flach bzw. etikettenartig ausgebildet und an dem jeweiligen Kettenglied 4 der Transportkette in geeigneter Weise befestigt.

Am Transporteur 1 bzw. an der Bewegungsbahn der Kettenglieder 4 ist wenigstens ein RFID-Lese- und Schreib-Kopf 12 (RFID-Transceiver) vorgesehen, d.h. ein Lese- und Schreibkopf 12, der zwischen sich und dem jeweiligen an der Transportkette 3 vorgesehenen Messmodul 9 eine bidirektionale Datenübertragung drahtlos über Funk bzw. über ein elektromagnetisches Feld ermöglicht, und zwar u.a. zum Auslesen der im Speicher des RFID-Transponder-Schaltkreises 10 abgelegten Messdaten des Sensors 11, wenn sich Messmodul 9 an dem Lese- und Schreibkopf 12 vorbeibewegt. Im einfachsten Fall ist es ausreichend, das Messmodul 9 nur an einem Kettenglied 4 vorzusehen.

Es besteht aber auch die Möglichkeit, an mehreren Kettengliedern 4 oder an mehreren Gruppen von Kettengliedern 4 jeweils wenigstens ein Messmodul 9 vorgesehen, oder aber sämtliche Kettenglieder 4 mit einem Messmodul 9 auszustatten.

In Abhängigkeit von der Ausbildung des jeweiligen Sensors 11 können mit den Messmodulen 9 unterschiedlichste physikalische Werte und/oder Betriebsparameter erfasst werden. Die entsprechenden mit dem Lese- und Schreibkopf 12 ausgelesenen Daten werden dann in einer beispielsweise zentralen Auswert- und Steuereinrichtung, z.B. Rechner ausgewertet und/oder verarbeitet und können für unterschiedlichste Dokumentations- und/oder Steuer- und/oder Regelungs-und/oder Überwachungszwecke usw. verwendet werden.

Der Sensor 11 des wenigstens einen Messmoduls 9 ist beispielsweise ein elektrischer Sensor zur Messung der zwischen zwei Kettengliedern 4 bzw. der an dem dortigen Bolzen 5 wirkenden Zugkräfte und hierfür beispielsweise ein Dehnungsmessstreifen. Aus den von dem wenigstens einen Messmodul 9 gelieferten und diesen Zugkräften entsprechenden Messwerten können dann u.a. bestimmt werden:
■ Der Reibwert zwischen der Transportkette 3 und der Transportkettenführung im Leerlauf, d.h. bei leerer oder nicht belasteter Transportkette 3;
■ Der Reibwert zwischen der belasteten Transportkette 3 und der Transportkettenführung, d.h. bei Belastung der Transportkette 3 mit Behältern 2, und zwar bei ungebremsten Behältern 2;
■ Der Reibwert zwischen der belasteten Transportkette 3, einerseits und der Transportkettenführung sowie den gebremsten, d.h. gegen ein Mitbewegen mit der Transportkette 3 zurückgehaltenen Behältern 2, andererseits, um aus diesem Reibwertwert und dem Reibwert zwischen der belasteten Transportkette 3 und der Transportkettenführung bei ungebremsten Behältern 2 den Reibwert zwischen den Behältern 2 und der Transportkette 3 zu bestimmen.

Mit den am Lese- und Schreibkopf 12 ausgelesenen Daten und den hieraus ermittelten Reibwerten ist es auch möglich, den Wirkungsgrad des Transporteurs 1 dauerhaft stabil zu halten und hierfür z. B. Schmiermittel optimal dosiert über ein Schmiermittel-Versorgungssystem z. B. auf die Gleitflächen 8 aufzubringen. Anhand der von den Messmodulen 9 gelieferten Messdaten lässt sich weiterhin auch ein eventueller Verschleiß von Funktionselementen des Transporteurs 1, insbesondere auch ein Verschleiß der Transportkette 3 frühzeitig erkennen.

Es versteht sich, dass bei entsprechender Ausbildung des jeweiligen Sensors 11 auch andere physikalische Größen, beispielsweise Druck- und/oder Temperatur mit dem wenigstens einen Messmodul 9 erfasst und über den Lese- und Schreibkopf 12 ausgelesen werden können. Weiterhin können bei entsprechender Ausbildung des jeweiligen Sensors 11 oder mehrerer an dem wenigstens einen Messmodul 9 vorgesehener Sensoren 11 auch Kombinationen von mehreren physikalischen Größen mit dem wenigstens einen Messmodul 9 erfasst, dort abgespeichert und am Lese- und Schreibkopf 12 für die weitere Verwendung oder Verarbeitung ausgelesen werden.

Die Erfindung wurde voranstehend an einem Ausführungsbeispiel beschrieben. Es versteht sich, dass zahlreiche Änderungen sowie Abwandlungen möglich sind.

Vorstehend wurde davon ausgegangen, dass das Transportelement des Transporteurs 1 eine Transportkette 3 mit einer Vielzahl von Kettengliedern 4 ist. Grundsätzlich kann die Erfindung in vorteilhafter Weise auch bei anderen Transporteuren oder Transportsystemen Verwendung finden, um dortige z.B. für den Betrieb und/oder die Wartung und/oder Überwachung und/oder Dokumentation relevante physikalische Größen unmittelbar an dem Transportelement und/oder an dessen Transportgliedern zu erfassen.

Die Erfindung wurde voranstehend im Zusammenhang mit einem Transporteur 1 für Flaschen oder dergleichen Behälter beschrieben. Selbstverständlich ist die erfindungsgemäße Ausbildung auch bei anderen Transporteuren oder Transportsystemen verwendbar, beispielsweise bei Transporteuren oder Transportsystemen zum Transportieren von Packmitteln generell, aber auch zum Transportieren von Behältern in Form von Kästen, beispielsweise in Form von Flaschenkästen oder zum Transportieren von zu Gruppen zusammengestellten Packmitteln bzw. entsprechenden Gebinden.

Der generelle Vorteil der Erfindung besteht darin, dass physikalische Größen oder Parameter, wie z.B. Kraft, Druck, Temperatur usw. am jeweiligen Transportelement aktuell und kontinuierlich sowie während des normalen Betriebs des Transportelementes dort erfasst werden, wo diese Größen bzw. Parameter interessieren, und dass die entsprechenden Messwerte oder -daten in besonders einfacher Weise mit hoher Übertragungssicherheit aus dem jeweiligen Messmodul 9 an wenigstens einer mit dem Transportelement nicht umlaufenden Lese- und Schreibkopf berührungslos, d.h. über eine Funkstrecke bzw. über ein elektromagnetisches Feld ausgelesen werden.

### Bezugszeichenliste

| | |
|---|---|
| 1 | Transporteur |
| 2 | Behälter bzw. Flasche |
| 3 | Transportkette |
| 4 | Kettenglied |
| 5 | Bolzen |
| 6 | Rahmen |
| 7 | Führungsgeländer |
| 8 | Gleitführung |
| 9 | Messmodul in Form eines RFID-TAGs |
| 10 | RFID-Transponder-Schaltkreis |
| 11 | elektrischer Sensor, beispielsweise Dehnungsmessstreifen |
| 12 | Lese- und Schreibkopf |
| A | Transportrichtung der Transportkette 3 |

## Patentansprüche

1. Transportsystem für den Transport von Packmitteln (2), hier nämlich aufrecht stehende Behältern, umfassend wenigstens einen Transporteur (1) zum Transportieren von Packmitteln (2) und/oder Packmittelgruppen, mit einem in einer Transportrichtung (A) bewegbaren und eine Transportfläche für die Packmittel (2) und/oder Packmittelgruppen bildenden Transportelement (3), sowie mit wenigstens einem elektrischen Messmodul (9) mit mindestens einem Sensor (11) zur Erfassung wenigstens einer physikalischen Größe, wobei das wenigstens eine Messmodul (9) an dem Transportelement (3) vorgesehen ist und einen einem RFID-TAG oder RFID-Transponder entsprechenden Aufbau mit einem mit dem wenigstens einen Sensor (11) zusammenwirkenden RFID-Transponder-Schaltkreis (10) aufweist, und dass an der Bewegungsbahn des Transportelementes (3) wenigstens ein RFID-Lese- und Schreib-Kopf (12) für eine drahtlose Datenübertragung zwischen dem wenigstens einen Messmodul (9) und dem wenigstens einen Lese- und Schreib-Kopf (12) sowie für eine Übertragung von elektrischer Energie an das wenigstens eine Messmodul (9) vorgesehen ist **dadurch gekennzeichnet, dass** eine ein Schmiermittel-Versorgungssystem zur Aufbringung eines Bandschmiermittels vorgesehen ist, die mit dem Lese- und Schreibkopf (12) ausgelesenen Daten in einer Auswert-und Steuereinrichtung auswertbar und/oder verarbeitet sind und mittels dieser Daten das Schmiermittel-Versorgungssystem steuer- und/oder regelbar ist.

2. Transportsystem nach Anspruch 1, **dadurch gekennzeichnet, dass** der wenigstens eine Sensor (11) Bestandteil des Messmoduls (9) oder des RFID-Transponder-Schaltkreises (10) ist.

3. Transportsystem nach Anspruch 1 oder 2, **dadurch gekennzeichnet, dass** der wenigstens eine Sensor (11) ein Kraft messender Sensor, beispielsweise ein Dehnungsmessstreifen oder ein wenigstens einen Dehnungsmessstreifen aufweisender Sensor ist.

4. Transportsystem nach einem der vorhergehenden Ansprüche nach einem der vorhergehenden Ansprüche, **dadurch gekennzeichnet, dass** der wenigstens eine Sensor ein Temperatursensor ist.

5. Transportsystem nach einem der vorhergehenden Ansprüche, **dadurch gekennzeichnet, dass** der wenigstens eine elektrische Sensor ein Drucksensor ist.

6. Transportsystem nach einem der vorhergehenden Ansprüche, **dadurch gekennzeichnet, dass** das Transportelement (3) aus mehreren in Transportrichtung (A) aneinander anschließenden Transportgliedern (4) besteht, und dass nur an einem Transportglied (4) zumindest ein Messmodul (9) vorgesehen ist.

7. Transportsystem nach einem der vorhergehenden Ansprüche, **dadurch gekennzeichnet, dass** das Transportelement (3) aus mehreren in Transportrichtung (A) anelnander anschließenden Transportgliedem (4) besteht, und des an jedem Transportglied (4) oder jeweils an einem Transportglied (4) einer von mehreren Transportgliedern (4) gebildeten Transportgliedergruppe wenigstens ein Messmodul (9) vorgesehen ist.

8. Transportsystem nach Anspruch 6 oder 7, **dadurch gekennzeichnet, dass** das wenigstens eine Messmodul (9) und/oder der wenigstens eine Sensor (11) dieses Messmoduls (9) für das Erfassen der zwischen wenigstens zwei Transportgliedern (4) wirkenden Kräfte, Insbesondere Zugkräfte ausgebildet sind.

9. Transportsystem nach einem der Ansprüche 6 - 8, **dadurch gekennzeichnet, dass** das Transportelement eine Transportkette (3) mit die Transportglieder bildenden Kettengliedern (4) ist.

10. Transportsystem nach einem der vorhergehenden Ansprüche, **gekennzeichnet durch** seine Ausbildung als äußerer Transporteur (1) in einer Anlage zum Behandeln der Packmittel (2).

11. Transportsystem nach einem der vorhergehenden Ansprüche, **gekennzeichnet durch** seine Ausbildung als vorrichtungsinterner Transporteur (1) einer Vorrichtung zum Behandeln der Packmittel (2).

12. Transportsystem nach einem der vorhergehenden Ansprüche nach einem der vorhergehenden Ansprüche, **dadurch gekennzeichnet, dass** der wenigstens eine Transporteur (1) und/oder dessen Transportelement (3) für den Transport von Flaschen oder dergleichen Behältern (2) ausgebildet sind.

## Claims

1. Transport system for the transport of packaging elements (2), here namely erect containers, comprising at least one transport device (1) for transporting packaging elements (2) and/or groups of packaging elements, with a transport element (3) which can be moved in a transport direction (A) and forms a transport surface for the packaging elements (2) and/or groups of packaging elements, and with at least one electric measuring module (9) with at least one sensor (11) for detecting at least one physical variable, wherein the at least one measuring module (9) is provided on the transport element (3) and comprises a structure corresponding to an RFID tag or RFID transponder with an RFID transponder circuit (10) cooperating with the at least one sensor (11), and on the movement track of the transport element (3) is provided at least one RFID read and write head (12) for wireless data transmission between the at least one measuring module (9) and the at least one read and write head (12) and for a transmission of electrical energy to the at least one measuring module (9), **characterised in that** a lubricant supply system is provided for the provision of a belt lubricant, that the data read by the read and write head (12) can be analysed and/or are processed in an analysis and control device and by means of these data the lubricant supply system can be controlled and/regulated.

2. Transport system according to claim 1, **characterised in that** the at least one sensor (11) is part of the measuring module (9) or the RFID transponder circuit (10).

3. Transport system according to claim 1 or 2, **characterised in that** the at least one sensor (11) is a force-measuring sensor, for example a strain gauge or at least one sensor comprising a strain gauge.

4. Transport system according to any one of the preceding claims, **characterised in that** the at least one sensor is a temperature sensor.

5. Transport system according to any one of the preceding claims, **characterised in that** the at least one electrical sensor is a pressure sensor.

6. Transport system according to any one of the preceding claims, **characterised in that** the transport element (3) consists of several transport members (4) successively adjacent to each other in the transport direction (A), and that at least one measuring module (9) is provided on only one transport member (4).

7. Transport system according to any one of the preceding claims, **characterised in that** the transport element (3) consists of several transport members (4) successively adjacent to each other in the transport direction (A), and that at least one measuring module (9) is provided on each transport member (4) or on one transport member (4) of each group of transport members formed from a multiplicity of transport members (4).

8. Transport system according to claim 6 or 7, **characterised in that** the at least one measuring module (9) and/or the at least one sensor (11) of this measuring module (9) are formed to detect the forces, in particular tensile forces, acting between at least two transport members (4).

9. Transport system according to any one of claims 6 to 8, **characterised in that** the transport element is a transport chain (3) with chain links (4) forming the transport members.

10. Transport system according to any one of the preceding claims, **characterised by** its formation as an external transport device (1) in a plant for handling the packaging elements (2).

11. Transport system according to any one of the preceding claims, **characterised by** its formation as a device-internal transport device (1) of a device for handling the packaging elements (2).

12. Transport system according to any one of the preceding claims, **characterised in that** the at least one transport device (1) and/or its transport element (3) are formed for transporting bottles or similar containers (2).

## Revendications

1. Système de transport pour le transport d'emballages (2), à savoir dans le cas présent de récipients maintenus à la verticale, comprenant au moins un transporteur (1) servant à transporter des emballages (2) et/ou des groupes d'emballages et doté d'un élément de transport (3) pouvant être déplacé dans un sens de transport (A) et formant une surface de transport pour les emballages (2) et/ou les groupes d'emballages et doté au moins d'un module de mesure (9) électrique équipé d'au moins un capteur (11) servant à détecter au moins une grandeur physique, sachant que le module de mesure (9) au moins au nombre de un est prévu au niveau de l'élément de transport (3) et présente une structure correspondant à un transpondeur étiquette RFID ou RFID dotée d'un circuit de commutation de transpondeur RFID (10) coopérant avec le capteur (11) au moins au nombre de un et sachant qu'est prévue au niveau de la trajectoire de déplacement de l'élément de transport (3) au moins une tête de lecture et d'écriture RFID (12) pour une transmission de données sans fil entre le module de mesure (9) au moins au nombre de un et la tête de lecture et d'écriture (12) au moins au nombre de une ainsi que pour une transmission d'énergie électrique au module de mesure (9) au moins au nombre de un, **caractérisé en ce qu'**un système d'alimentation en lubrifiant est prévu pour appliquer un lubrifiant en bande, **en ce que** les données lues avec la tête de lecture et d'écriture (12) peuvent être évaluées et/ou sont traitées dans un dispositif d'évaluation et de commande, et **en ce que** le système d'alimentation en lubrifiant peut être commandé et/ou réglé au moyen desdites données.

2. Système de transport selon la revendication 1, **caractérisé en ce que** le capteur (11) au moins au nombre de un fait partie intégrante du module de mesure (9) ou du circuit de commutation du transpondeur RFID (10).

3. Système de transport selon la revendication 1 ou 2, **caractérisé en ce que** le capteur (11) au moins au nombre de un est un capteur mesurant une force, est par exemple une jauge extensométrique ou un capteur présentant au moins une jauge extensométrique.

4. Système de transport selon l'une quelconque des revendications précédentes, **caractérisé en ce que** le capteur au moins au nombre de un est un capteur de température.

5. Système de transport selon l'une quelconque des revendications précédentes, **caractérisé en ce que** le capteur électrique au moins au nombre de un est un capteur de pression.

6. Système de transport selon l'une quelconque des revendications précédentes, **caractérisé en ce que** l'élément de transport (3) est constitué de plusieurs organes de transport (4) se raccordant les uns aux autres dans le sens de transport (A), et **en ce qu'**au moins un module de mesure (9) est prévu uniquement au niveau d'un organe de transport (4).

7. Système de transport selon l'une quelconque des revendications précédentes, **caractérisé en ce que** l'élément de transport (3) est constitué de plusieurs organes de transport (4) se raccordant les uns aux autres dans le sens de transport (A), et **en ce qu'**au moins un module de mesure (9) est prévu au niveau de chaque organe de transport (4) ou respectivement au niveau d'un organe de transport (4) d'un groupe d'organes de transport formé par plusieurs organes de transport (4).

8. Système de transport selon la revendication 6 ou 7, **caractérisé en ce que** le module de mesure (9) au moins au nombre de un et/ou le capteur (11) au moins au nombre de un dudit module de mesure (9) sont réalisés pour détecter les forces, en particulier les forces de traction, agissant entre au moins deux organes de transport (4).

9. Système de transport selon l'une quelconque des revendications 6 à 8, **caractérisé en ce que** l'élément de transport est une chaîne de transport (3) dotée de maillons de chaîne (4) formant les organes de transport.

10. Système de transport selon l'une quelconque des revendications précédentes, **caractérisé par** sa réalisation sous la forme d'un transporteur (1) externe dans une installation servant à traiter les emballages (2).

11. Système de transport selon l'une quelconque des revendications précédentes, **caractérisé par** sa réalisation sous la forme d'un transporteur (1) interne au dispositif d'un dispositif servant à traiter les emballages (2).

12. Système de transport selon l'une quelconque des revendications précédentes, **caractérisé en ce que** le transporteur (1) au moins au nombre de un et/ou l'élément de transport (3) de ce dernier sont réalisés pour le transport de bouteilles ou de récipients (2) similaires.
